(19) Europäisches Patentamt / European Patent Office / Office européen des brevets

(11) EP 1 844 994 A1

(12) DEMANDE DE BREVET EUROPEEN

(43) Date de publication:
17.10.2007 Bulletin 2007/42

(51) Int Cl.:
*B60R 21/34* (2006.01)

(21) Numéro de dépôt: 07104686.6

(22) Date de dépôt: 22.03.2007

(84) Etats contractants désignés:
AT BE BG CH CY CZ DE DK EE ES FI FR GB GR HU IE IS IT LI LT LU LV MC MT NL PL PT RO SE SI SK TR
Etats d'extension désignés:
AL BA HR MK YU

(30) Priorité: 07.04.2006 FR 0651261

(71) Demandeur: Peugeot Citroen Automobiles SA
78943 Vélizy-Villacoublay Cedex (FR)

(72) Inventeurs:
• Hillairet, Blandine
92150, SURESNES (FR)
• Janssen, Benjamin
95170, Deuil la barre (FR)

(74) Mandataire: Ménès, Catherine
PSA Peugeot Citroen
DRIA/PPIQ/VPI/BLE
18, rue des Fauvelles
F-92256 La Garenne Colombes (FR)

(54) **Dispositif de montage d'un raccord destiné à être monté entre un capot de véhicule automobile et un élément rigide sous capot**

(57) L'invention a pour objet un raccord (8) destiné à être implanté entre le capot (2) d'un véhicule automobile et un élément rigide (7) situé sous ce capot (2) au moyen d'une fixation (9) reliée à cet élément rigide (7) caractérisé en ce que le raccord (8) présente un point haut situé dans une zone d'exclusion prévue pour la déformation du capot afin d'éviter que la tête (6) du piéton ne heurte ledit élément rigide (7), l'ensemble du raccord (8) et de la fixation (9) ayant un comportement sous contrainte tel que la déformation de cet ensemble et/ou la casse de la fixation participe à l'absorption du choc piéton si la tête est lancée dans une zone où le capot se déforme jusqu'à toucher le raccord d'air.

FIG.2

## Description

La présente invention concerne un raccord, notamment un raccord d'air faisant partie du circuit d'admission d'air frais au moteur, et plus précisément le dispositif de montage de ce raccord qui est destiné à être monté sous un capot de véhicule automobile et un élément rigide sous capot.

Pour minimiser l'impact d'un choc entre un piéton et un véhicule, notamment pour réduire les risques de lésions à la tête, l'architecture du véhicule doit être conçue d'une manière telle que la tête ne heurte pas à grande vitesse une pièce rigide comme par exemple le bloc moteur. Ceci se traduit notamment par des normes législatives connues sous l'acronyme HIC (selon l'appellation anglo-saxonne Head Injury Criterion signifiant « critère de lésion de la tête »), qui impose qu'une grande partie de l'énergie de l'impact soit absorbée avant que le capot ne vienne en contact avec l'élément rigide au niveau de la tête du piéton accidenté.

Ce critère est le plus souvent satisfait en concevant des capots ni trop souples (les enfoncements seraient alors trop importants), ni trop raides (la tête subirait alors une décélération trop rapide pouvant elle-même être fatale au piéton), et en considérant la zone sous le capot (ou plus exactement sous la doublure si on considère qu'un capot est typiquement formé d'une peau externe et d'une doublure interne) comme une zone d'exclusion à l'intérieur de laquelle on ne doit disposer aucun élément rigide.

Les normes législatives étant naturellement de plus en plus sévères dans un souci de réduction de la dangerosité des véhicules, la tendance est à une augmentation de plus en plus grande de cette zone d'exclusion. Or, l'espace sous capot est à l'évidence relativement réduit, surtout sur les véhicules compacts, et pour de multiples raisons, il n'est pas nécessairement souhaitable de rehausser la hauteur du capot.

Parmi les composants qui doivent être logés le plus souvent entre le bloc moteur et le capot figurent notamment les conduites d'admission en air frais. Ces conduites sont typiquement réalisées en matière plastique dure et constituent donc des zones de rigidité importantes qui normalement doivent être placées en dehors de la zone d'exclusion.

Dans certains cas, il est possible de concilier l'implantation de la conduite et les critères de sécurité en optimisant sa compacité par exemple en diminuant, au moins localement, la taille de la conduite. A l'évidence, cette solution a ses limites si on ne veut pas dégrader les performances du moteur.

C'est pourquoi les auteurs de la présente invention se sont donnés pour but une nouvelle conception de raccord permettant son implantation au moins partiellement dans la zone d'exclusion sans pour autant compromettre ni les performances de sécurité ni les performances du moteur.

Selon l'invention, ce but est atteint par l'utilisation d'un raccord présentant un point haut dans la zone d'exclusion et d'une fixation capable d'emmagasiner au moins une partie des efforts du choc. En d'autres termes, l'invention a ainsi pour objet principal un raccord destiné à être implanté entre le capot d'un véhicule automobile et un élément rigide situé sous ce capot au moyen d'une fixation reliée à cet élément rigide caractérisé en ce que le raccord présente un point haut situé dans une zone d'exclusion prévue pour la déformation du capot afin d'éviter que la tête du piéton ne heurte ledit élément rigide, l'ensemble du raccord et de la fixation ayant un comportement sous contrainte telle que la déformation de cet ensemble et/ou la casse de la fixation participe à l'absorption du choc piéton si la tête est lancée dans une zone où le capot se déforme jusqu'à toucher le raccord d'air.

L'énergie susceptible d'être ainsi absorbée par le raccord peut se traduire par l'aire de la courbe représentative d'une réponse à l'effort de l'ensemble raccord plus fixation, c'est-à-dire une représentation de la déformation (enfoncement de l'ensemble en mm) en fonction de la contrainte à laquelle l'ensemble est soumis (en Newton). De préférence, cette aire doit être au moins égale à environ 5000 N.mm, de préférence encore au moins égale à environ 6000 N.mm. Il doit être toutefois souligner que quelles que soient les propriétés intrinsèques de l'ensemble raccord-fixation, l'enfoncement maximum est plafonné (au maximum, il peut être conçu que l'ensemble s'enfonce jusqu'à venir s'aplatir sur le cache culasse, mais à partir de ce moment là, il est clair que même si la fixation n'a pas encore cassée, il n'y a plus aucun gain possible au niveau de l'effet amortisseur joué par l'ensemble raccord-fixation).

Selon un premier mode de réalisation, ces valeurs sont essentiellement obtenues en utilisant une fixation fragile (fusible), qui va casser lorsque la contrainte devient trop importante. Dans un tel cas, le raccord sera choisi dur, c'est-à-dire indéformable sous la contrainte induite par un choc piéton.

Selon un autre mode de réalisation, l'ensemble a un comportement élasto-plastique, c'est-à-dire que la déformation du matériau continue (l'ensemble continue de s'enfoncer), la contrainte subie restant constante.

Selon un troisième mode de réalisation de l'invention, l'ensemble du raccord et de la fixation a un comportement mixte, qui peut traduire d'une part une cassure de la fixation suivie d'une déformation du raccord.

Quel que soit le mode de réalisation choisi, c'est la combinaison de la géométrie et du matériau du raccord, ainsi que du type de fixations qui permet de donner la liberté d'implanter le raccord assez près du capot (et donc d'augmenter son diamètre en cas de besoin d'amélioration des performances moteur) tout en faisant en sorte que ce soit compatible du choc piéton réglementaire

Dans une variante de l'invention tout particulièrement préféré, le raccord présente une forme gauche, rappelant par exemple la forme d'un ressort ou d'un escalier en colimaçon, de sorte que lorsqu'une pression est exercée au niveau de la fixation (donc dans la zone du raccord la plus proche du capot), le raccord va se déformer non seulement selon un plan vertical mais également latéralement en vrillant.

Avantageusement, le raccord présente un extremum au niveau de sa zone la plus proche du capot. Dans cette variante, il ne s'agit donc pas d'épouser la forme de la culasse pour ne pas s'en éloigner mais au contraire de créer un certain vide entre le raccord et la culasse.

Dans ces conditions, il devient non seulement possible, mais éventuellement souhaitable de disposer le raccord relativement près du capot, jusqu'à une distance de 30mm environ, dans la direction de l'impact (traditionnellement 50° par rapport à l'horizontale) tout en respectant les normes de sécurité associées au choc piéton.

D'autres détails et caractéristiques avantageuses de l'invention ressortent de la description de différents modes de réalisation de l'invention, faite ci-après en référence aux dessins annexés dans lesquels :

La figure 1 est une vue en coupe d'un raccord air disposé au dessus du couvre culasse moteur (élément rigide), mais à une distance suffisante du capot pour respecter la zone d'exclusion. Cette configuration correspond à la solution de l'état de l'art proposée pour satisfaire le critère choc piéton ;

Les figures 2 à 4 montrent un exemple de réalisation de l'invention avec un raccord gauche associé à une fixation cassable, respectivement selon une vue arrière, de dessus et de côté

Les figures 5 à 8 illustrent des variantes du mode de réalisation précédent avec différentes géométries de fixation.

Il peut être rappelé que selon le projet de directive 2010 (qui est encore en discussion), le critère choc piéton est considéré comme satisfait si :

- d'une part, dans une zone appelée « zone tête enfant », une tête de 3,5 kg heurtant le capot à une vitesse d'impact de 40 km/h selon une direction de 50° par rapport à l'horizontale, donne un HIC (Head Injury Criterion) inférieur à 1250 sur minimum ¾ de la zone de test et inférieur à 2000 sur maximum ¼ de la zone de test

- et d'autre part, dans une zone appelée « zone tête adulte », une tête de 4,5 kg heurtant le capot à une vitesse d'impact de 40 km/h selon une direction de 65° par rapport à l'horizontale, donne un HIC inférieur à 1250 sur minimum ¾ de la zone de test et inférieur à 2000 sur maximum ¼ de la zone de test

A partir du moment où la tête heurte le capot, elle subit une décélération (accélération négative pour laquelle on ne garde que la valeur absolue pour les calculs, c'est pourquoi elle est représentée en accélération positive). Cette décélération est plus ou moins importante selon la raideur de ce que la tête rencontre à chaque instant (capot initial, capot après un premier enfoncement et donc déjà déformé, action ou non de la doublure, contact ou non avec des éléments sous capot...). Ces changements de décélérations se traduisent par une courbe y=f(t) sur laquelle est calculé le HIC (sur une fenêtre de temps glissante de maximum 15ms) et selon la formule suivante :

$$HIC = Max\left\{ (t_2 - t_1).\left( \frac{1}{t_2 - t_1}.\int_{t_1}^{t_2} \gamma(t)dt \right)^{2,5} \right\} \text{ avec } t_2 - t_1 \leq 15ms ).$$

Dans ces conditions, pour minimiser la dangerosité d'un choc piéton, il est intéressant de faire en sorte que le niveau d'accélération soit aussi faible que possible au moment du contact avec le point dur, autrement dit permettre au maximum l'amortissement du choc via la déformation du capot et de sa doublure. Ceci est obtenu en éloignant autant que faire tous les points durs du capot. Pour autant, il est clair que ceci conduit à des compromis au niveau du style du véhicule qui ne sont pas toujours souhaités.

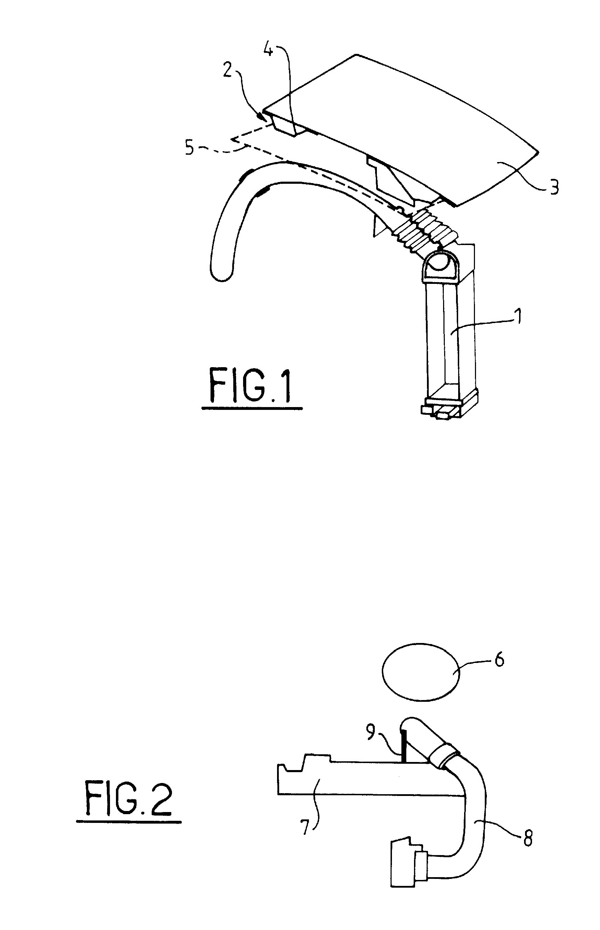

La figure 1 est une illustration de la problématique de l'invention. Selon une architecture moteur désirée, un raccord d'air destiné à amener l'air depuis un radiateur 1 vers l'entrée d'un bloc moteur ici non représenté, doit enjamber une partie de la culasse, et être implanté entre le couvre culasse et le capot 2 comportant une peau externe 3 et une doublure 4. Un tel raccord est de façon conventionnelle constitué par un tube courbé, dont le diamètre est de l'ordre de 4 à 5 cm (cette valeur étant donnée à titre purement exemplatif). La pression intérieure est relativement importante de sorte que ce raccord est normalement réalisé dans une matière plastique dure, par exemple en PVA chargé fibres de verre, qui doit être capable de présenter une tenue en pression suffisante.

Selon les techniques conventionnelles, ce raccord est courbé selon une seule direction, autrement dit, suit une courbe plane. Pour réduire les conséquences d'un choc piéton, il est recommandé de prévoir une zone d'exclusion, délimitée d'une part par la doublure du capot et d'autre part par une surface fictive 5, représentée par des traits pointillés et souvent dénommée capot technique, écartée du capot d'une distance minimum de par exemple 80 mm. Aucun composant rigide ne doit être implanté dans cette zone d'exclusion.

Pour respecter cet impératif, il a déjà été proposé d'amincir le raccord dans sa zone la plus proche du capot en formant par exemple un méplat comme illustré sur la figure 1.

Clairement, cette technique n'est possible que si le raccord n'empiète que très légèrement dans la zone d'exclusion, faute de quoi le raccord n'est plus fonctionnel - ou du moins incompatible avec les performances moteur souhaitées.

Aussi, pour ne pas compromettre ces performances, les inventeurs proposent de modifier l'ensemble constitué par le raccord et sa fixation sur un élément rigide (comme par exemple le moteur) de façon à lui donner une capacité à dissiper une partie de l'énergie du choc piéton, au même titre que le capot. Dans ces conditions, il devient possible - et même souhaitable - que le raccord soit disposé d'une manière telle qu'il empiète au moins pour partie dans la zone d'exclusion.

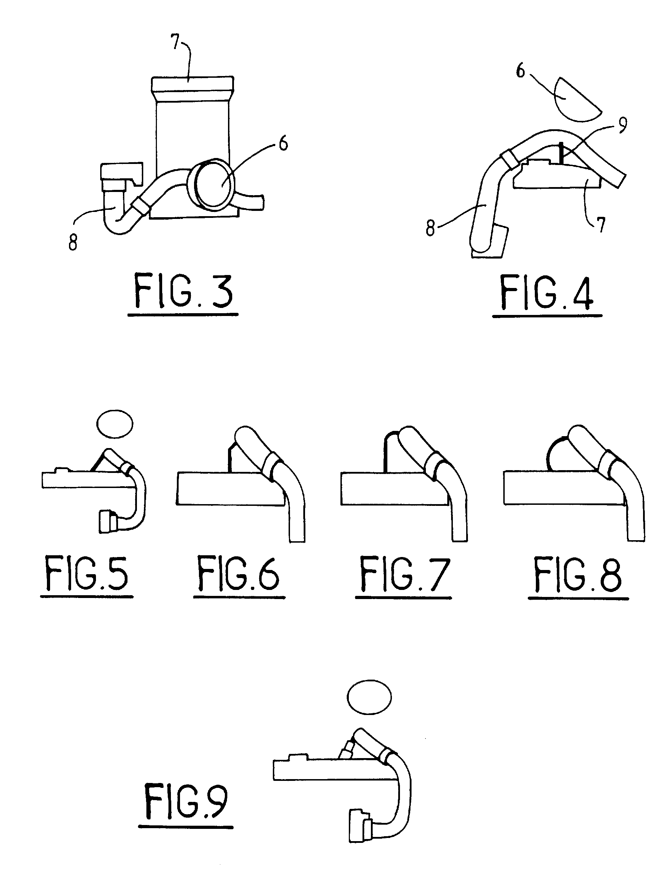

Les figures 2, 3 et 4 illustrent un premier mode de réalisation de l'invention avec une fixation droite associée à un raccord empiétant dans la zone d'exclusion.

Sur ces vues respectivement, d'arrière, de dessus et de côté, on a représenté en 6 une masse hémisphérique simulant une tête, un couvre culasse 7, un raccord 8 et une fixation droite 9 Sur ces figures, le capot et la doublure ne sont pas représentés mais le lecteur comprendra que celui-ci est bien sûr interposé entre la masse représentant une tête et le raccord.

Dans toutes les variantes proposées, le raccord n'est plus inscrit dans un plan mais est gauche, présentant ainsi une conception géométrique telle que le comportement global à l'enfoncement est bon. Autrement dit, même si le raccord est dans un matériau rigide comme indiqué précédemment, il va pouvoir se déformer à la manière un peu d'un ressort de suspension, et cette déformation va elle-même contribuer à minimiser l'effet d'un choc piéton.

Par ailleurs, le raccord est fixé sur le moteur (ou la culasse) au moyen d'une fixation « cassante ». Dans le cas ici illustré, cette fixation est positionnée dans la zone du point haut du raccord, mais cette implantation n'est pas indispensable, surtout si le raccord est suffisamment dur pour transmettre toute la contrainte subie au niveau de la fixation.

Comme on peut le voir plus particulièrement sur les figures 2 et 4, la fixation peut être une fixation droite (bien entendu, elle est attachée au raccord par exemple par un collier), disposée en position essentiellement verticale.

Des géométries plus complexes peuvent être également envisagées, illustrées par exemples aux figures 5 à 8, comme un fixation oblique (figure 5), une fixation comportant plusieurs segments, avec un point anguleux plus ou moins marqué (figure 6 et figure 7) ou encore une fixation courbe.

De façon générale les modes de réalisation illustrés aux figures 2, 4 et 5 tendent à privilégier une absorption de la contrainte jusqu'à un niveau relativement important, suivie d'une casse. En revanche, avec des formes moins anguleuses, notamment des formes courbes comme illustré à la figure 8, une amorce de rupture peut être nécessaire si on souhaite favoriser une dissipation de la contrainte par la casse de la fixation.

Les figures 9 à 11 permettent d'illustrer ces différents comportements. Sur ces figures on a représenté l'allure des courbes montrant l'évolution de la contrainte subie par l'ensemble du raccord et de la fixation en fonction du niveau de déformation de cet ensemble (en pratique l'enfoncement).

Dans le cas de la figure 9, l'ensemble fixation-raccord a un comportement essentiellement élastique c'est-à-dire que la fixation casse, le raccord « tombant » alors immédiatement hors de la zone d'exclusion. C'est le type de comportement qui peut être obtenu notamment avec dans la variante illustrée figure 2. Dans ce cas, il est souhaitable que la contrainte se produise pour un niveau de contrainte compris par exemple entre 2000 et 3000 N, avec une raideur relativement importante, par exemple de l'ordre de 300 à 700 N/mm, et de préférence encore de l'ordre de 400 à 600 N/mm.

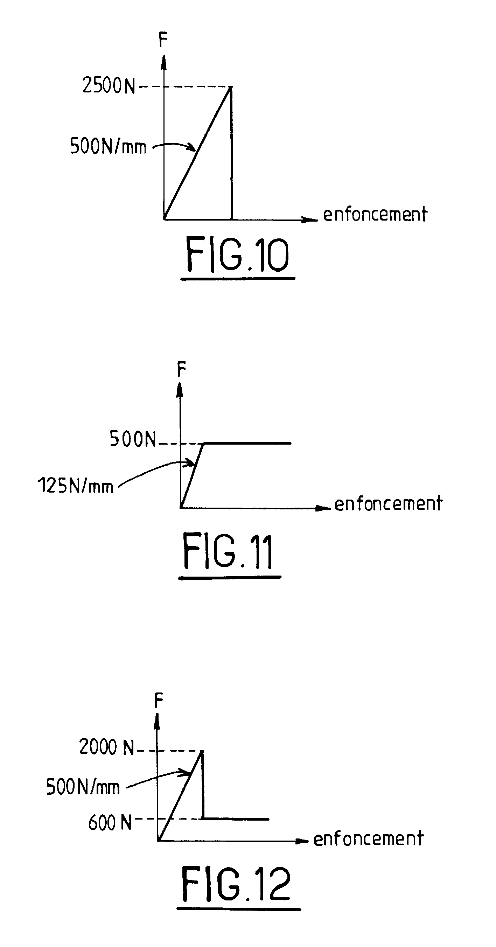

Dans le cas illustré à la figure 10, on va avoir un comportement dit élasto-plastique, c'est-à-dire que la fixation va dans un premier temps résister puis plier donc s'enfoncer de manière lente. Dans ces conditions, il est préférable que la raideur de la fixation soit plus faible que dans le cas précédent, par exemple de l'ordre de 80 à 150 N/mm, notamment d'environ 125 N /mm, avec un maximum de niveau de contrainte entre par exemple 300 et 1000 N/mm, de préférence de l'ordre de 500 N/mm. Ce mode de déformation est typiquement favorisé par le mode de réalisation illustré à la figure 8.

Enfin, dans le cas illustré à la figure 11, un comportement mixte sera obtenu, avec une rupture suivie d'un enfoncement (mais non total). Dans ces conditions, la raideur de la fixation pourra être du même ordre de grandeur que dans le cas d'un comportement élastique, avec un niveau de contrainte maximale légèrement inférieur, par exemple de l'ordre de 2000 N, et une contrainte résiduelle de l'ordre de 500 à 700 N.

A noter que même si l'invention n'est pas nécessairement limitée à une fixation d'un raccord au dessus d'une culasse, le nombre total de fixation, et leur répartition par rapport à l'ensemble du capot, doit rester relativement petit pour ne pas compromettre les performances du capot lui-même. En général ce nombre n'excedera donc pas environ 3 fixations associées à des éléments empiétant dans la zone d'exclusion. Il importe également que ces éléments empiétant n'occupent qu'une petite partie de la surface du capot (de préférence moins de 10%, de préférence encore moins de 5%) et qu'ils restent positionnés dans la zone centrale, par exemple dans les 2/3 centraux pour éviter une implantation proche de la périphérie du capot.

Le fait d'autoriser le dépassement du capot technique par certains organes (et donc une proximité entre le capot et certains organes, sous certaines conditions) permet de libérer certaines contraintes fortes d'implantation « subies » par les motoristes ou les personnes d'adaptation moteur (admission notamment).

Dans l'exemple de l'invention (raccord d'air d'une ligne en pression), cela permet également d'autoriser de nouveau des diamètres de raccords, permettant d'augmenter les performances moteur qui auraient été limitées voire réduites dans le cas où les organes sous capot devraient impérativement être sous le capot technique.

Avantageusement, avec les raccords selon l'invention, et plus particulièrement lorsqu'ils sont placés délibérément à une faible distante du capot, le raccord participe à l'absorption d'un choc tête piéton si la tête est lancée dans une zone où le capot se déforme jusqu'à toucher le raccord d'air.

L'invention permet ainsi de préserver de bonnes performances au choc piéton tout en minimisant les contraintes d'implantation en z pour les concepteurs de composants et une amélioration des performances du moteur par la limitation des contraintes sur l'implantation et le diamètre des raccords d'air, en autorisant une distance minimale entre le raccord et le capot inférieure à 40 mm.

**Revendications**

1.  Raccord destiné à être implanté entre le capot d'un véhicule automobile et un élément rigide situé sous ce capot au moyen d'une fixation reliée à cet élément rigide **caractérisé en ce que** le raccord présente un point haut situé dans une zone d'exclusion prévue pour la déformation du capot afin d'éviter que la tête du piéton ne heurte ledit élément rigide, l'ensemble du raccord et de la fixation ayant un comportement sous contrainte telle que la déformation de cet ensemble et/ou la casse de la fixation participe à l'absorption du choc piéton si la tête est lancée dans une zone où le capot se déforme jusqu'à toucher le raccord d'air.

2.  Raccord selon la revendication 1, **caractérisé en ce que** l'ensemble raccord-fixation a un comportement de déformation fragile.

3.  Raccord selon la revendication 1, **caractérisé en ce que** l'ensemble raccord-fixation a un comportement de déformation élasto-plastique.

4.  Raccord selon la revendication 1, **caractérisé en ce que** l'ensemble raccord-fixation a un comportement de déformation mixte, fragile et élasto-plastique.

5.  Raccord selon l'une quelconque des revendications précédentes, **caractérisé en ce que** l'aire de la courbe représentative de la déformation de l'ensemble raccord-fixation en fonction de la contrainte à laquelle l'ensemble est au moins égale à 5000 N.mm,.

6.  Raccord selon l'une quelconque des revendications précédentes, **caractérisé en ce que** le raccord est gauche.

7.  Raccord selon l'une quelconque des revendications précédentes, **caractérisé en ce que** la distance minimale entre le raccord et le capot est inférieure à 40 mm.

FIG.1

FIG.2

FIG.3

FIG.4

FIG.5

FIG.6

FIG.7

FIG.8

FIG.9

F

2500N ----

500N/mm →

enfoncement

## FIG.10

F

500N ----

125N/mm →

enfoncement

## FIG.11

F

2000 N ----

500N/mm →

600 N ----

enfoncement

## FIG.12

Office européen
des brevets

Numéro de la demande

EP 07 10 4686

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PATENT ABSTRACTS OF JAPAN vol. 2003, no. 12, 5 décembre 2003 (2003-12-05) -& JP 2004 231075 A (INOAC CORP), 19 août 2004 (2004-08-19) * abrégé * | 1-5,7 | INV. B60R21/34 |
| X | DE 10 2004 004727 A1 (VOLKSWAGEN AG) 18 août 2005 (2005-08-18) * page 14, ligne 5 - page 15, ligne 22; figures 4,5 * | 1,3,5-7 | |
| X | DE 10 2004 017362 A1 (DAIMLERCHRYSLER AG) 27 octobre 2005 (2005-10-27) * alinéa [0014] - alinéa [0016]; figures 1,2 * | 1-5,7 | |
| X | FR 2 851 973 A (CERA [FR]) 10 septembre 2004 (2004-09-10) * page 4, ligne 14 - page 5, ligne 26; figure 1 * | 1 | |

DOMAINES TECHNIQUES RECHERCHES (IPC)

B60R
F02M

Le présent rapport a été établi pour toutes les revendications

| Lieu de la recherche | Date d'achèvement de la recherche | Examinateur |
|---|---|---|
| Berlin | 11 mai 2007 | Ekblom, Henrik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 10 4686

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-05-2007

| Document brevet cité au rapport de recherche | Date de publication | Membre(s) de la famille de brevet(s) | Date de publication |
|---|---|---|---|
| JP 2004231075 A | 19-08-2004 | AUCUN | |
| DE 102004004727 A1 | 18-08-2005 | AUCUN | |
| DE 102004017362 A1 | 27-10-2005 | AUCUN | |
| FR 2851973 A | 10-09-2004 | AUCUN | |

EPO FORM P0460

Pour tout renseignement concernant cette annexe : voir Journal Officiel de l'Office européen des brevets, No.12/82